# FASCICULE DE BREVET EUROPEEN

(11) **EP 1 257 138 B1**
(45) Date de publication et mention de la délivrance du brevet: **13.04.2016**
(21) Numéro de dépôt: 02290997.2
(22) Date de dépôt: 19.04.2002
(51) Int. Cl.: H04W 8/20

(54) **PROCÉDÉ DE COMMUNICATION AVEC PLUSIEURS TÉLÉPHONES ET TRANSFERT D'ABONNEMENT**
VERFAHREN ZUR KOMMUNIKATION MIT MEHREREN TELEPHONEN UND ÜBERTRAGUNG DES ABONNEMENTS
METHOD FOR COMMUNICATION WITH SEVERAL TELEPHONES AND TRANSFER OF SUBSCRIPTION

(30) Priorité: 25.04.2001 FR 0105560
(43) Date de publication de la demande: 13.11.2002
(73) Titulaire: Apple Inc., Cupertino, CA 95014 (US)
(72) Inventeur: Rieul, François, 78100 Saint Germain en Laye (FR); Fond, Michel, 92410 Ville d'Avray (FR)
(74) Mandataire: Lang, Johannes

(56) Documents cités:
- EP-A- 0 786 916
- EP-A1- 1 077 008
- EP-A2- 0 378 450
- WO-A-00/31994
- WO-A-01/13660
- WO-A-99/38338
- WO-A1-99/59360
- US-B1- 6 615 057

## Description

L'invention concerne la radiotéléphonie cellulaire et les communications assurées au moyen de terminaux, dits portables ou mobiles, de radiotéléphonie cellulaire. Plus précisément, l'invention concerne les terminaux équipés d'émetteur/récepteur de liaison à courte portée de type Bluetooth. Plus précisément encore, l'invention concerne l'utilisation de deux terminaux de radiotéléphonie cellulaire pourvus d'un émetteur/récepteur de liaison à courte portée.

On rappellera que les données de fonctionnement d'un terminal de radiotéléphonie cellulaire, c'est-à-dire les données qui lui permettent de prendre une ligne et d'assurer une communication, sont stockées dans une carte à puce appelée carte SIM fournie par l'opérateur téléphonique à la souscription de l'abonnement.

Un autre exemple se trouve dans le document WO99/59360, Telefon Ericsson, 18/11/1999.

L'objet de l'invention est d'assurer de façon particulière et naturellement avantageuse des communications de radiotéléphonie cellulaire à l'aide au moins de deux terminaux téléphoniques de type Bluetooth et chacun pourvu de données de fonctionnement propres.

Pour bien fixer les idées et à titre d'exemple, on songe ici à un premier terminal équipant par exemple un véhicule automobile et à un second terminal qui serait le terminal personnel du conducteur du véhicule.

L'invention concerne ainsi un procédé de communication de radiotéléphonie cellulaire à l'aide de deux équipements téléphoniques, au moins pouvant être reliés entre eux par radio à courte portée et comportant des moyens audio et des moyens de radiotéléphonie et étant pourvu de données de fonctionnement, dans lequel, après liaison radio de deux équipements, un premier équipement transmet au deuxième ses données de fonctionnement pour que les communications soient assurées au moyen du deuxième équipement et avec les données de fonctionnement du premier.

Le premier équipement est prioritaire et substitue son abonnement à celui du deuxième équipement. Grossièrement, et en d'autres termes, il y a transfert d'abonnement, celui du deuxième équipement, par exemple celui du véhicule, étant coupé.

Si les données de fonctionnement du deuxième équipement sont particulières, c'est-à-dire si, par exemple, des correspondants ne peuvent être appelés qu'avec ces données de fonctionnement, les données de fonctionnement pouvent être réaffectées à leurs équipements respectifs en cas de tentative de communication avec un correspondant uniquement accessible avec les données de fonctionnement du deuxième équipement.

Dans ce cas, et de préférence, le transfert des données de fonctionnement d'un équipement à l'autre est contrôlé en fonction d'un répertoire de numéros de téléphone, avantageusement, par des programmes du deuxième équipement.

Les données de fonctionnement du deuxième équipement sont particulières si, par exemple, elles correspondent à un opérateur privé de mise en communication avec un centre de maintenance, un centre de mise à jour, un centre d'assistance ou tout autre centre de prestation de services pouvant intervenir sur le calculateur de bord d'un véhicule automobile, dans le cas, déjà considéré, où le deuxième équipement est installé dans une planche de bord de véhicule.

Alors, dans ce cas, le transfert des données de fonctionnement d'un équipement à l'autre peut aussi être contrôlé en fonction d'un répertoire de fonctions.

L'invention sera mieux comprise à l'aide de la description suivante, en référence au dessin annexé, sur lequel :

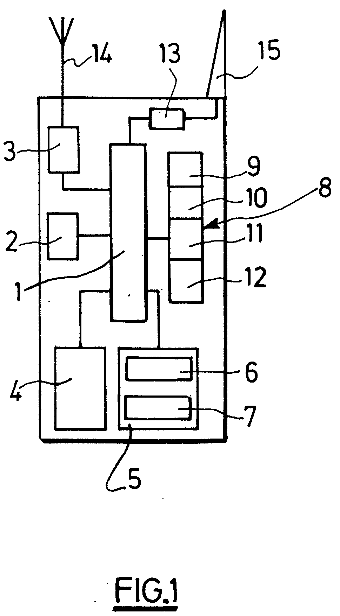

- la figure 1 est un schéma par blocs de l'un des deux équipements téléphoniques de l'invention et

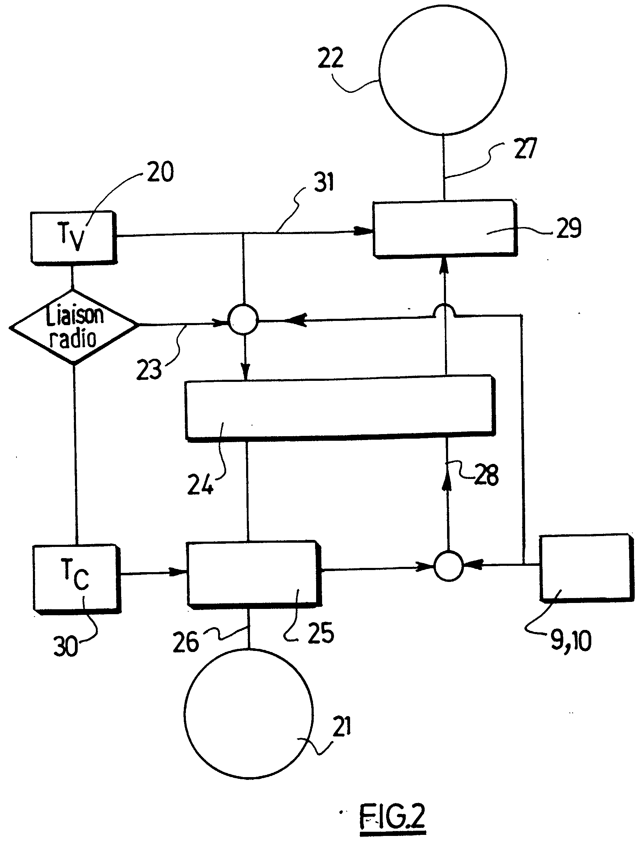

- la figure 2 est l'organigramme des communications possibles avec les équipements de l'invention.

Les équipements de l'invention sont des terminaux de radiotéléphonie cellulaire qui comportent, chacun, autour d'un microprocesseur 1 et reliés à lui, une carte à puce SIM de fonctionnement 2, un émetteur/récepteur 3, ici de type Bluetooth, avec son antenne 14, une interface homme-machine comprenant un clavier 4, un ensemble audio 5, avec un microphone 6 et un haut-parleur 7, une mémoire 8 de stockage de données en l'espèce, pour l'un des deux terminaux, un répertoire 9 de numéros de téléphone, un répertoire de fonctions 10, des données 11 de fonctionnement de la carte SIM d'un autre terminal téléphonique et des programmes 12, agencés pour se substituer aux moyens radio et pour fonctionner en relais audio pour un autre terminal téléphonique, un bloc radio 13 et son antenne 15.

On vient en fait de décrire le terminal Tv approprié pour être installé dans une planche de bord d'un véhicule automobile. L'autre terminal Tc, par exemple celui de son propriétaire ou conducteur, est un terminal mobile classique équipé aussi d'un émetteur/récepteur radio à courte portée et dont la mémoire de stockage ne comporte a priori, des moyens énumérés ci-dessus, que le répertoire de numéros de téléphone.

Le terminal Tv est équipé d'une carte SIM 2 qui correspond à un opérateur privé de mise en communication avec un centre de maintenance, un centre de mise à jour, un centre d'assistance ou tout autre centre de prestation de services pouvant intervenir sur le calculateur de bord du véhicule associé.

Soient donc le terminal de voiture Tv 20 et le terminal personnel Tc 30 pour assurer des communications téléphoniques à travers le réseau cellulaire "public" Rp 21, au moyen de deux terminaux, et le réseau particulier Rv 22, au moyen du seul abonnement du terminal Tv 20.

Après que le propriétaire du terminal Tc 30 soit entré dans la voiture, les deux terminaux entrent en liaison radio 23 et les programmes 12 du terminal Tv 20 procèdent au transfert 24 d'abonnement dans le terminal Tv 20, en coupant l'abonnement du terminal Tv 20 et en y substituant celui du terminal prioritaire Tc 30, par transmission des données 11 d'abonnement et donc de fonctionnement de la carte SIM 2 du terminal Tc 30 dans la mémoire 8 du terminal Tv 20. Alors, les communications 26 à travers le réseau Rp 21 sont assurées 25 à l'aide de l'ensemble audio 5 et du bloc radio 13 du terminal Tv 20 et de l'abonnement du terminal Tc 30.

S'il s'agit d'assurer une communication 27 à travers le réseau Rv 22, impossible avec l'abonnement du terminal Tc 30, les abonnements doivent être réaffectés à leurs terminaux respectifs, surtout pour que les données de fonctionnement du terminal Tv 20 puissent être mises en oeuvre. Il est alors procédé, toujours à l'aide des programmes 12 et sous le contrôle du répertoire de numéros 9 de la mémoire 8 du terminal Tv 20, au transfert des abonnements 28, pour que le correspondant souhaité puisse être appelé (31) à l'aide du terminal Tv 20, avec ses moyens audio et radio et son abonnement (29).

Naturellement, la réaffectation des abonnements peut aussi être directement contrôlée, parallèlement au répertoire de numéros 9, par le répertoire de fonctions 10 du terminal.

Dans le cas où, pour continuer de considérer l'exemple du véhicule automobile, il y aurait plusieurs terminaux portables en liaison radio avec le terminal du véhicule, il serait facile de leur attribuer des rangs hiérarchisés de priorité d'accès au terminal du véhicule, pour que le transfert d'abonnement soit effectué selon cet ordre de priorité.

## Revendications

1. Procédé de communication de radiotéléphonie cellulaire à l'aide d'un premier et d'un deuxième équipement téléphonique (20, 30), lesdits équipements pouvant être reliés entre eux par une liaison radio (23) et comportant des moyens de radiotéléphonie (13, 15),
le procédé comprenant une étape de transfert de données du premier vers le deuxième équipement par mise en oeuvre de ladite liaison radio,
dans lequel, la liaison radio étant à courte portée, après la mise en oeuvre de ladite liaison radio entre les premier et deuxième équipements, le premier équipement (30) transmet (24) au deuxième équipement (20) des données d'abonnement du premier équipement pour que les communications de radiotéléphonie soient assurées (25) au moyen du deuxième équipement et avec les données d'abonnement du premier équipement,
dans lequel, chacun desdits équipements comportant des données d'abonnement, les données d'abonnement sont réaffectées (28) à leurs équipements respectifs (20, 30) en cas de tentative de communication avec un correspondant uniquement accessible avec les données d'abonnement (2) du deuxième équipement (20).

2. Procédé selon la revendication 1, dans lequel le transfert (24) des données de fonctionnement d'un équipement à l'autre est contrôlé en fonction d'un répertoire de numéros de téléphone (9).

3. Procédé selon l'une des revendications 1 et 2, dans lequel le transfert de données de fonctionnement (24) est contrôlé par un répertoire de fonctions (10).

4. Procédé selon l'une des revendications 2 et 3, dans lequel le transfert de données d'abonnement (24) s'effectue par des programmes (12) du deuxième équipement (20).

## Patentansprüche

1. Kommunikationsverfahren zur zellularen Funktelefonie unter Verwendung einer ersten und zweiten telefonischen Ausrüstung (20, 30), wobei die Ausrüstungen über eine Funkverbindung (23) miteinander verbunden werden können und Funktelefoniemittel (13, 15) umfassen,
wobei das Verfahren einen Schritt des Übertragens der Daten von der ersten bis zur zweiten Ausrüstung durch Implementierung der Funkverbindung umfasst, wobei die Funkverbindung eine kurze Reichweite aufweist und, nach der Implementierung der Funkverbindung zwischen der ersten und zweiten Ausrüstung, die erste Ausrüstung (30) Abonnierungsdaten der ersten Ausrüstung an die zweite Ausrüstung (20) überträgt (24), damit die Funktelefoniekommunikationen unter Verwendung der zweiten Ausrüstung und mit den Abonnierungsdaten der ersten Ausrüstung gewährleistet werden (25),
wobei jede der Ausrüstungen Abonnierungsdaten umfasst und die Abonnierungsdaten den jeweiligen Ausrüstungen (20, 30) wieder zugewiesen werden (28), im Falle eines Kommunikationsversuches mit einem Teilnehmer, der nur mit den Abonnierungsdaten (2) der zweiten Ausrüstung (20) zugänglich ist.

2. Verfahren nach Anspruch 1, bei welchem die Übertragung (24) der Betriebsdaten von einer Ausrüstung zur anderen in Abhängigkeit eines Telefonnummernverzeichnisses (9) gesteuert wird.

3. Verfahren nach einem der Ansprüche 1 und 2, bei welchem die Übertragung der Betriebsdaten (24) durch ein Funktionsverzeichnis (10) gesteuert wird.

4. Verfahren nach einem der Ansprüche 2 und 3, bei welchem die Übertragung der Abonnierungsdaten (24) durch Programme (12) der zweiten Ausrüstung (20) durchgeführt wird.

## Claims

1. A method for cellular radiotelephony communication using a first and a second telephone apparatus (20, 30), wherein said apparatuses can be linked to one another through a radio link (23) and comprise radiotelephony means (13, 15), the method comprising a step of transferring data from the first to the second apparatus by implementing said radio link,
wherein, the radio link having a short range, after implementing said radio link between the first and second apparatuses, the first apparatus (30) transmits (24) to the second apparatus (20) subscription data of the first apparatus so that the radiotelephony communications can be ensured (25) using the second apparatus and with the subscription data of the first apparatus, wherein, each of said apparatuses having subscription data, the subscription data is reallocated (28) to its respective apparatus (20, 30) in case of attempt of communication with a party that is only accessible with the subscription data (2) of the second apparatus (20).

2. The method according to claim 1, wherein the transfer (24) of the operating data from one apparatus to the other is controlled based on a telephone number directory (9).

3. The method according to one of claims 1 and 2, wherein the transfer of operating data (24) is controlled by a function directory (10).

4. The method according to one of claims 2 and 3, wherein the transfer of subscription data (24) is carried out through programs (12) of the second apparatus (20).
